# EUROPEAN PATENT APPLICATION

(11) **EP 3 388 386 A1**
(43) Date of publication of application: **17.10.2018**
(21) Application number: 18000348.5
(22) Date of filing: 12.04.2018
(51) Int. Cl.: B66D 1/58, B66D 3/04, B66D 5/30, G01L 5/00, G01L 5/10

(54) **A FORESTRY WINCH PROVIDED WITH AN ASSEMBLY FOR THE MEASUREMENT OF BRAKING POWER AND METHOD FOR ITS OPERATION**

(30) Priority: 13.04.2017 SI 201700104
(71) Applicant: Uniforest, D.o.o., 3301 Petrovce (SI)
(72) Inventor: HORVAT, Robert, 3302 Grize (SI); POLAK, Marko, 3303 Gomilsko (SI); PINTAR, Drago, 3301 Petrovce (SI)
(74) Representative: Golmajer Zima, Marjanca

(57) **Abstract**

A forestry winch provided with an assembly for the measurement of braking power, comprising a drum (2) that is arranged in a housing (1) and to which a hauling wire cable (3) is wound and stored, wherein the drum is pivotally attached on an axle (4) mounted in the housing; a clutch (5) arranged on one lateral side of the drum and connected with the Cardan shaft of a tractor; a drum brake (6) that is circumferentially arranged on another lateral side of the drum; a hydraulic block (7) comprising a hydraulic medium tank, a pump for providing pressure for the hydraulic medium, at! least one control unit in the form of a hydraulic or proportional hydraulic valve for the clutch control, at least one control unit in the form of a proportional hydraulic valve (8) that is connected with the hydraulic cylinder (9) with the belonging piston, a control unit (16) with which the user controls and operates the forestry winch, all said elements being mutually hydraulically connected, wherein the forestry winch comprises a deflection cylinder for deviating and shifting the hauling wire cable from its hauling direction, a measuring instrument (15) for measuring shifts, said instrument having an output signal, a control block arranged inside the housing of the winch and comprising at least one control unit with a regulating algorithm, wherein the control block is connected with the measuring instrument for measuring shifts in a way that allows reception of its output signal and is connected with the hydraulic block in a way that allows the control of the proportional hydraulic valve of the brake.

## Description

### Object of Invention

The object of the invention is a winch, particularly a forestry winch, comprising a drum arranged in a housing, said drum being configured to wind and store a hauling wire cable, a clutch and a brake connected with said drum, a hydraulic block, and a control unit, and a method for operating such a forestry winch.

### Technical Problem

The technical problem is to conceive such a forestry winch that will allow measurement of braking power thus giving the operator a possibility to control the size of the braking power and/or to change the braking power to a desired value in each moment of braking regardless of conditions, particularly regardless of the amount of the hauling wire cable being wound on the drum. The braking power must be supervised and controlled in a way that will not obstruct handling the hauling wire cable and will not substantially affect the construction of the forestry winch. At the same time, the concept should be simple and robust to meet the working conditions in the forest.

### Prior Art

A forestry winch intended for work in the forest, particularly for hauling of timber, is provided with a drum for winding and unwinding a hauling wire cable, which is driven by a clutch and a chain drive connected with a Cardan shaft of a tractor. When the clutch is actuated, the hauling wire cable is wound onto the drum. When the clutch is inactivated, the brake of the drum simultaneously turns on thus preventing the drum from rotating in the opposite direction and from unwinding the hauling wire cable. The forestry winch is controllable through a hydraulic block that comprises at least a hydraulic medium tank, a pump for providing pressure for the hydraulic medium and the control unit in the form of hydraulic valves.

The forestry winch has a predetermined nominal pulling power which is in fact its maximum pulling power. The pulling power of a winch changes in use and depends on the number of wounds of the cable on the drum or from the thickness of the winding of the hauling wire cable. As the thickness of the coil changes, the pulling power is changing, too, because of the constant torque M which is transferred from the chain drive and the clutch to the drum. The winch thus has maximum pulling power when the hauling wire cable is completely unwound and has the minimum pulling power when the hauling wire cable is completely wound.

To hold a load on the hauling wire cable in a certain position, the brake of the drum must exert a braking power on the drum that is at least identical to or greater than the pulling power. For safety reasons, the braking power normally exceeds the pulling power by at least 25%. As the brake acts directly on the drum, on its circumference, the braking power changes depending on the thickness of the coil, precisely on the number of the windings of the hauling wire cable on the drum. When the hauling wire cable is completely unwound, the braking power is greatest and amounts to 100% of the nominal braking power. The larger the coil of the hauling wire cable on the drum, the smaller the braking power. When the hauling wire cable is completely wound, the braking power is smallest and can amount to merely 50% of the nominal braking power.

The brake of the drum, which is located on the circumferential side of the drum, is in fact a friction band brake that is arranged on the circumference of the drum by means of a pre-stressed spring and is controlled by a hydraulic cylinder with a belonging piston and a hydraulic control valve, which are both part of the hydraulic block. In the moment the clutch is turned off, the brake is turned on in that the hydraulic control valve reduces the pressure of the hydraulic medium in the hydraulic cylinder. The latter uncouples from the pre-stressed spring which pushes the brake of the drum against the circumference of the drum. The actual braking power in a given moment is not only dependent on the force of the spring exerted on the brake but also on a number of other external factors, such as current pulling power, temperature of the clutch and the drum, ambient temperature, and others.

Knowing the actual size of the braking power is especially important when the winch and the vehicle are overloaded, for instance in the event of a log getting stuck behind an obstacle, in the event of the vehicle skidding due to overload, and the like. The clutch turns off and the brake turns on instantly with a certain braking power that is a maximum power under given circumstances. The size of the braking power depends on the weight and the position of the load, the thickness of the coil of the hauling wire cable, and other factors. To release the load or the vehicle, the braking power must be reduced in order to allow the drum to rotate, what will release the pulling power in the hauling wire cable. It is important that the braking power is sufficiently reduced, yet not too reduced. Too massive reduction in the braking power can cause uncontrolled shift of the load particularly in a direction opposite from the desired one. Too massive reduction in the braking power can cause unequal and impulsive load of both the hauling wire cable and the entire winch with the tractor.

The applicant is acquainted with solutions, in which the braking power is changed by changing the pressure in the hydraulic cylinder of the brake by means of a proportional hydraulic valve which is a constituent part of the hydraulic block and a measuring converter, such as a potentiometer integrated in the control assembly of a forestry winch. When a user wants to reduce the braking power thus achieving partial unwinding of the drum and the hauling wire cable, he assesses the size of the braking power based on the load size, load position, the amount of the wound hauling wire cable on the drum. A user having long years of experience and knowledge can develop a certain skill to approximately assess the size of the actual braking power, yet there is still a huge possibility of misassessment because the actual size of the braking power depends on numerous factors and not only; on the load and the amount of the hauling wire cable being wound on the drum. Based on his experience, the user foresees the maximum braking power needed for the hauling wire cable to partly unwind from the drum and for the load not to move in a direction opposite to the desired one. The user uses a potentiometer to act on the proportional hydraulic valve and to increase the pressure of the hydraulic medium in the brake cylinder and consequently reduces the force of the spring exerted on the brake, thus reducing the braking power. As the conditions which dictate the actual size of the braking power vary, the braking power also varies and the user's assessment of the size of the braking power is unreliable. Yet a further problem is non-linear dependence of the braking power on individual criteria. User's missassessment of the size of the braking power and/or its uncontrolled reduction often results in undesired consequences, such as a shift of the load in an undesired direction or an impulsive shift of the load which jerkily moves the vehicle, or even vehicle skidding.

### Solution to the Technical Problem

The technical problem is solved by a forestry winch provided with an assembly for the measurement of braking power, said winch comprising a drum arranged in a housing, said drum being configured to wind and store a hauling wire cable, wherein the drum is pivotally attached on an axle mounted in the housing; a clutch arranged on one lateral side of the drum and connected with the Cardan shaft of a tractor; a drum brake that is circumferentially arranged on another lateral side of the drum; a hydraulic block comprising and hydraulically connecting a hydraulic medium tank, a pump for providing pressure for the hydraulic medium, at least one control unit in the form of a hydraulic or proportional hydraulic valve for the clutch control, at least one control unit in the form of a proportional hydraulic valve that is connected with the hydraulic cylinder with the belonging piston; a control unit, with which the user controls and operates the forestry winch, wherein it comprises a deflection cylinder via which the hauling wire cable is conducted, wherein the cylinder axis is perpendicular to the longitudinal axis of the cable; and a measuring instrument for measuring shifts, said instrument having an output signal Sᵢ that is proportional to the shift of the axis of the deflection cylinder when the hauling wire cable passes over the deflection cylinder; and a control block that is arranged within the winch housing and comprises at least a control unit with a regulation algorithm, wherein the control block is connected with the measuring instrument for measuring shifts in a way that allows reception of its output signal Sᵢ, and is connected with the hydraulic block in a way that allows the control of the proportional hydraulic valve of the brake.

The forestry winch is further characterized in that the control block compares the value of the output signal of the measuring instrument for measuring deformations with previously known and input reference values, wherein a reference value corresponds to a known size of the braking power, receives the required value of the braking power input by the user through the control unit of the winch to the control block as an input signal, compares the value of the braking power in a certain time with the required value of the braking power, controls the proportional valve of the brake based on the established difference between the current actual braking power on the axis of the deflection cylinder and the braking power required by the user, such that the proportional hydraulic valve of the brake performs such a difference in the pressure in the hydraulic cylinder of the brake that the actual braking power of the brake in the hauling wire cable corresponds to the value of the braking power required by the user's input through an external winch controller.

The forestry winch provided with an assembly for the measurement of braking power of the invention operates by the method comprising the following steps
- comparison of the value of the output signal of the measuring instrument for measuring deformations with previously known and input reference values, wherein a reference value corresponds to a known value of the braking power,
- reception of the required value of the braking power, Which is transmitted by the user via the control unit of the winch to the control block, as the input signal (Sᵢ),
- comparison of the value of the braking power in a certain time with the required value of the braking power,
- control of the proportional hydraulic valve of the brake based on the established difference between the current actual braking power on the axis of a pulley and the braking power required by the user, such that the latter performs such a difference in the pressure in the hydraulic cylinder of the brake that the actual braking power of the brake in the hauling wire cable corresponds to the value of the braking power required by the user's input through an external winch controller.

The solution of the invention allows measurement of the actual braking power in the hauling wire cable without any modifications needed in the construction of the forestry winch. The hauling wire cable is guided over the deflection cylinder which deviates and moves the hauling wire cable away from its hauling direction by a certain angle. The braking power exerted on the hauling wire cable also acts on the deflection cylinder or the axis, on which it is arranged. The deflection cylinder, more particularly its axis, moves due to the load. A shift of the axis of the deflection cylinder is measured by the shift meter at predetermined time intervals, said shift meter transferring the measured shift to the control block which, among other things, also comprises a control unit with a regulation algorithm. The latter adjusts the value of the braking power corresponding to the actual braking power to the measured value of the output signal. On the basis of his experience, the user determines the size of the required braking power needed in a certain moment to carry out a certain manoeuvre. The required value is selected/set on the control unit. By comparing the measured and the required value of the braking power, the control block controls the proportional hydraulic valve of the brake, such that the pressure in the hydraulic cylinder of the brake changes to a value that causes such reduction/increase in the spring force that its acting on the brake causes a change that results in reducing the size of the braking power to the required value.

The deflection cylinder is preferably formed as a pulley arranged in the forestry winch on the winch housing in order to guide the hauling wire cable when wound to the drum or unwound thereof, and also to redirect the hauling wire cable by a certain angle, preferably 90°, with respect to the exit direction of the hauling wire cable from the drum. The advantage of such a solution lies in the fact that the measuring instrument is arranged on the element which is part of the constructional assembly of an existing forestry winch. No changes are therefore needed neither in the construction of the winch nor in the manipulation of the hauling wire cable.

The braking power measurement of the invention allows determination of the actual braking power size in a given moment, consequently the user can reach such a braking power as required by a given situation.

The deflection cylinder can also be embodied as a movable cylinder fastened on the winch housing and movable in a direction perpendicular to the direction of running of the hauling wire cable and loaded by a certain force that ascertains deviation of the hauling wire cable in the unblocked state. The movable cylinder moves because of the braking power exerted on the hauling wire cable. The shift of the movable cylinder is measured by the measuring instrument of the shift.

It is important that the measuring instrument for the measurement of the braking power in the hauling wire cable is arranged either on the hauling wire cable or on the element, on which the braking power of the hauling wire cable is exerted.

The forestry winch of the invention eliminates the uncontrolled and unknown changing in the braking power. Consequently, the operation of such forestry winch is considerably safer.

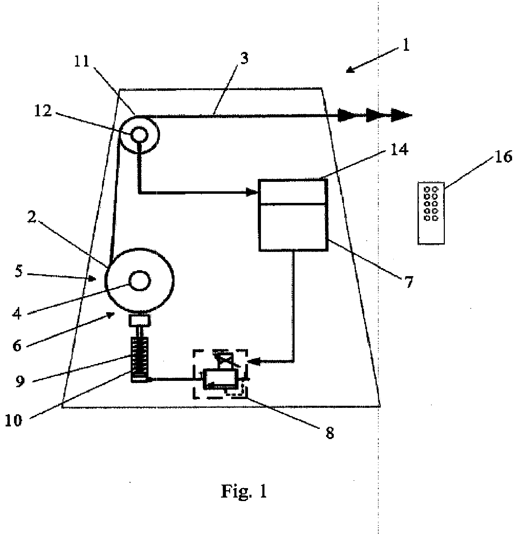

The forestry winch of the invention will be described hereinbelow in more detail by way of an embodiment and a drawing representing in
Figure 1: a schematic diagram of a forestry winch.

In the embodiment, the forestry winch used in works in the forest is arranged with its housing on a traction vehicle, such as a forestry tractor, by means of a conventional three-point system. The forestry winch comprises
- a drum 2 arranged in a housing 1, to which drum a hauling wire cable 3 is wound and stored, wherein the drum 2 is pivotally arranged on a drum axle 4 mounted in the housing 1,
- a clutch 5 arranged at one lateral side of the drum 2 and connected via chain transmission with a Cardan shaft of the tractor, said clutch, when actuated, transferring torque to the drum 2 thus creating pulling power in the hauling wire cable 3,
- a brake 6 of the drum, that is circumferentially arranged on another lateral side of the drum 2,
- a hydraulic block 7 comprising a hydraulic medium tank; a pump for providing pressure for the hydraulic medium; at least one control unit in the form of a hydraulic or proportional hydraulic valve for the clutch 5 control; at least one control unit in the form of a proportional hydraulic valve 8 that is connected with a hydraulic cylinder 9 with a belonging piston;
- a control unit 16, with which a user controls and operates the forestry winch.

The brake 6 of the drum is configured as a circumferential band brake connected with a pre-stressed spring 10. For actuation purposes, the spring 10 is connected with the hydraulic cylinder 9 of the brake, said hydraulic cylinder being connected with the proportional hydraulic valve 8 and both are part of the hydraulic block 7.

The hauling wire cable 3 is arranged on the drum 2 in the form of windings. The hauling wire cable 3 needs to be unwound from the drum 2 to be carried to a site of fastening to a load. While the hauling wire cable 3 is unwound from the drum 2, the clutch 5 is distant from the drum 2, the brake 6 is deactivated and the drum 2 freely rotates around the axis 4 of the drum. The hauling wire cable 3 is led from the drum 2 via a deflection cylinder 11 configured as a pulley that is freely pivotally arranged on an axle 12 and preferably intended to guide the hauling wire cable 3. The axle 12 is fastened in any way on the framework of the winch above the drum 2 and is substantially parallel to the axle 4, on which the drum 2 is arranged. The pulley 11 is arranged on the axle 12 in a way that the direction of running of the hauling wire cable 3 when leaving the pulley 11 is changed substantially by an angle of 90° in a direction away from the winch with respect to the direction of the unwinding from the drum 2.

The clutch 5 and the brake 6 exclude each other in operation. In the very moment when the haulage of the load is completed and the clutch 5 gets uncoupled, a brake 6 is activated via the proportional hydraulic valve 8 of the brake, which is part of the mechanical-hydraulic assembly, of the hydraulic cylinder 9 of the brake with the belonging piston and the pre-stressed spring 10, said brake 6 acting with certain braking power on the drum 2 and consequently on the hauling wire cable. In a certain moment, the braking power is determined by the force of the spring, the pulling power of the load, and numerous external factors, such as temperature of the brake and the clutch, ambient temperature, distribution of the load, and the like.

The braking power acts on the hauling wire cable 3 and since the cable is guided at a certin angle via the freely rotating pulley 11, it also acts on the pulley 11 and the axle 12. The axle 12 gets deformed under the action of the braking power. The deformation is reflected in the sag of the axle 12. To measure the deformation in the form of sag, a measuring instrument 15 is arranged on the axle 12 for measuring deformations, said instrument having an output signal Sᵢ that is proportional to the deformation of the axle 12. In the present embodiment, the measuring instrument 15 for measuring deformations is in the form of resistance measuring strips that communicate with a control block 14 that is a constituent part of the winch.

When the brake 6 is activated, the measuring instrument 15 for measuring deformations measures deformation/sag of the axle 12 at predetermined time intervals, said sags resulting from said axle being loaded with the current braking power. An output signal Sₘ of the measuring instrument 15 for measuring deformations, which is tension depending on the size of deformation, is transmitted to the control block 14.

The control block 14 comprises at least one unit for selecting a function of the winch, a unit for receiving an output signal from the measuring instrument, which is in the form of a measured resistance value as a result of deformations due to the action of the braking power in a given moment, a unit for receiving the required value of the braking power as required by the user, a control unit with a regulating algorithm, a unit for controlling the proportional hydraulic valve of the brake. The control block 14 is connected at one side with the measuring instrument 15 in a way that allows reception of its output signal Sᵢ, and is connected on the other side with the hydraulic block 7 in a way that allows the control of the proportional hydraulic valve 8 of the brake. The control block 14 which comprises the control unit with the regulating algorithm:
- compares the value of the output signal of the measuring instrument 15 for measuring deformations with previously known and input reference values, wherein each reference value corresponds to each known value of the braking power,
- receives the required value of the braking power, which is transmitted by the user via the control unit 16 of the winch to the control block 14, as the input signal Sᵢ,
- compares the value of the braking power in a certain time with the required value of the braking power,
- based on the established difference between the current actual braking power on the axis 12 and the braking power required by the user, controls the proportional valve 8 of the brake such that the latter performs such a difference in the pressure in the hydraulic cylinder 9 of the brake that the actual braking power of the brake 6 in the hauling wire cable 3 corresponds to the value of the braking power required by the user's input through an external winch controller. If reduced braking power is required, the pressure in the hydraulic cylinder 9 is increased and the force of the pre-stressed spring 10 exerted on the brake 6 is reduced. If the required value of the braking power was sufficient, the drum 2 starts rotating and the hauling wire cable gets released, wherein the clutch 5 remains inactive. The hauling wire cable 3 partly unloads due to reduced braking power. When the user assesses that the hauling wire cable has been sufficiently unloaded, he increases the required value of the braking power to the desired higher value or to a previous value.

The control block 14 is connected with the control unit 16, with which the user operates the forestry winch, in any known way, it can be an electrically-hydraulic connection, different types of wireless connections.

## Claims

1. A forestry winch provided with an assembly for the measurement of braking power, comprising
- a drum (2) arranged in a housing (1), to which drum a hauling wire cable (3) is wound and stored, wherein the drum (2) is pivotally arranged on an axle (4) mounted in the housing (1),
- a clutch (5) arranged at one lateral side of the drum (3) and connected with a Cardan shaft of the tractor,
- a brake (6) of the drum, that is circumferentially arranged on another lateral side of the drum (2),
- a hydraulic block (7) comprising and hydraulically connecting a hydraulic medium tank, a pump for providing pressure for the hydraulic medium, at least one control unit in the form of a hydraulic or proportional hydraulic valve for the clutch (5) control, at least one control unit in the form of a proportional hydraulic valve (8) that is connected with a hydraulic cylinder (9) with a belonging piston,
- a control unit (16), with which a user controls and operates the forestry winch,
**characterized in that** it comprises a deflection cylinder (11) for deflecting and shifting the hauling wire cable (3) from its hauling direction,
a measurement instrument (15) for measuring shifts that has an output signal (Sᵢ),
a control block (14) arranged inside the housing (1) of the winch and comprising at least one control unit with a regulating algorithm, wherein the control block (14) is connected with the measuring instrument (15) for measuring shifts in a way that allows reception of its output signal (Sᵢ), and is connected with the hydraulic block (7) in a way that allows the control of the proportional hydraulic valve (8) of the brake.

2. Forestry winch according to claim 1, **characterized in that** the deflection cylinder (11) is a pulley with an axle (12), on which a measuring instrument (15) for measuring deformations is arranged, said instrument having an output signal (Sᵢ) that is proportional to the deformation of the axle (12) when the hauling wire cable (3) passes over the pulley (11).

3. Forestry winch according to any preceding claim, **characterized in that** the control block (14)
- compares the value of the output signal of the measuring instrument (15) for measuring deformations with previously known and input reference values, wherein each reference value corresponds to each known value of the braking power,
- receives the required value of the braking power, which is transmitted by the user via the control unit (16) of the winch to the control block (14), as the input signal (Sᵢ),
- compares the value of the braking power in a certain time with the required value of the braking power,
- based on the established difference between the current actual braking power on the axis (12) of the pulley and the braking power required by the user, controls the proportional hydraulic valve (8) of the brake such that the latter performs such a difference in the pressure in the hydraulic cylinder (9) of the brake that the actual braking power of the brake (6) in the hauling wire cable (3) corresponds to the value of the braking power required by the user's input through an external winch controller.

4. A method for operating a forestry winch provided with an assembly for the measurement of braking power, comprising
- a drum (2) arranged in a housing (1), to which drum a hauling wire cable (3) is wound and stored, wherein the drum (2) is pivotally arranged on an axle (4) mounted in the housing (1),
- a clutch (5) arranged at one lateral side of the drum (2) and connected with a Cardan shaft of the tractor,
- a brake (6) of the drum, that is circumferentially arranged on another lateral side of the drum (2),
- a hydraulic block (7) comprising a hydraulic medium tank, a pump for providing pressure for the hydraulic medium, at least one control unit in the form of a hydraulic or proportional hydraulic valve for the clutch (5) control, at least one control unit in the form of a proportional hydraulic valve (8) that is connected with a hydraulic cylinder (9) of the brake with a belonging piston, all said elements being mutually hydraulically connected;
- a control unit (16), with which a user controls and operates the forestry winch,
**characterized in that**
- the value of the output signal of the measuring instrument (15) for measuring deformations is compared with previously known and input reference values, wherein each reference value corresponds to each known value of the braking power,
- the required value of the braking power, which is transmitted by the user via the control unit (16) of the winch to the control block (14), is received as the input signal (Sᵢ),
- the value of the braking power in a certain time is compared with the required value of the braking power,
- based on the established difference between the current actual braking power on the axis (12) of the pulley and the braking power required by the user, the proportional hydraulic valve (8) of the brake is controlled, such that the latter performs such a difference in the pressure in the hydraulic cylinder (9) of the brake that the actual braking power of the brake (6) in the hauling wire cable (3) corresponds to the value of the braking power required by the user's input through an external winch controller.
